# FASCICULE DE BREVET EUROPEEN

(11) **EP 3 015 900 B1**
(45) Date de publication et mention de la délivrance du brevet: **15.02.2017**
(21) Numéro de dépôt: 15191557.6
(22) Date de dépôt: 27.10.2015
(51) Int. Cl.: G02B 27/01, G02B 27/22, H04N 13/04, G02B 5/28

(54) **SYSTÈME DE VISUALISATION STÉRÉOSCOPIQUE À MULTIPLEXAGE DE LONGUEUR D'ONDE ACTIF**
STEREO-ANZEIGESYSTEM MIT AKTIVEM WELLENLÄNGENMULTIPLEXING
STEREOSCOPIC VIEWING SYSTEM WITH ACTIVE WAVELENGTH MULTIPLEXING

(30) Priorité: 31.10.2014 FR 1402462
(43) Date de publication de la demande: 04.05.2016
(73) Titulaire: THALES, 92400 Courbevoie (FR)
(72) Inventeur: CONI, Philippe, 33127 ST JEAN D'ILLAC (FR); GROSSETETE, Matthieu, 33150 CENON (FR); GUEGUEN, Aude, 33200 BORDEAUX (FR)
(74) Mandataire: Bréda, Jean-Marc

(56) Documents cités:
- WO-A2-2008/140787
- JP-A- S6 222 034
- JP-A- H03 197 845
- US-A1- 2006 098 093
- US-A1- 2011 102 563

## Description

Le domaine de l'invention est celui des systèmes de visualisation permettant de présenter une image en superposition sur le mode extérieur. Les applications techniques sont principalement l'aide à la conduite de véhicule. L'invention s'applique tout particulièrement au domaine des planches de bord d'aéronef où le pilote a besoin de voir simultanément l'extérieur et d'avoir des informations sur la conduite de vol ou la navigation de l'appareil. L'invention peut aussi s'appliquer à tous types de systèmes de conduite et de contrôle affichant des symboles en superposition sur un environnement extérieur naturel. C'est le cas, par exemple, des tours de contrôle ou des postes de navigation de navire. L'environnement extérieur peut également être simulé. C'est, le cas, des simulateurs de pilotage ou des plateformes de contrôle et de commandement des drones.

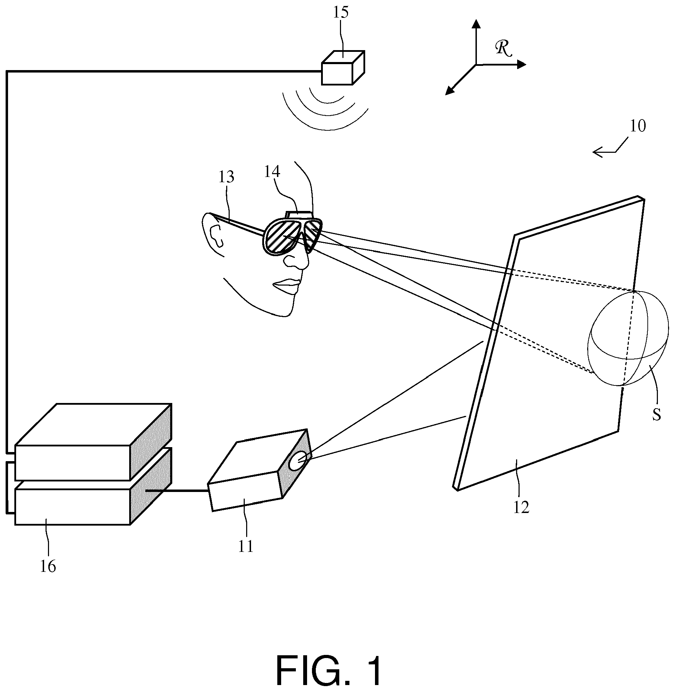

Il existe différents types de systèmes de visualisation permettant d'assurer la superposition d'une image synthétique sur un environnement extérieur. Une solution possible exposée en figure 1 consiste à mettre en oeuvre un projecteur d'images stéréoscopique. Le système de visualisation 10 comprend alors :
- Un projecteur 11 d'images stéréoscopiques dites « 3D » capable de générer au moins deux images appelées « OEil Droit » / « OEil Gauche » représentatives d'un même objet. Dans le cas de la figure 1, l'objet est une sphère S ;
- Un écran 12 semi-transparent diffusant sur lequel sont projetées les images « OEil Droit » / « OEil Gauche » ;
- Une paire de lunettes 13 comportant des moyens de séparation des images « OEil Droit » / « OEil Gauche » et des premiers moyens de détection 14 et destinée à être portée par un utilisateur ;
- des seconds moyens de détection 15 liés à un repère fixe 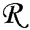 et qui, associés aux premiers moyens de détection 14 permettent la détection de la position spatiale de la paire de lunettes 13 dans ce repère fixe ;
- Un calculateur électronique 16 comprenant au moins les fonctions suivantes :
   o Acquisition des signaux issus des moyens de détection 14 et /ou 15 et calcul de la position de la paire de lunettes ;
   o Calcul de la position de l'image stéréoscopique correspondant à la position de la paire de lunettes ;
   o Calcul des deux images OEil Droit / OEil Gauche.

Il existe différents moyens d'assurer la séparation stéréoscopique des images projetées.

Dans une première solution technique, on utilise la séparation temporelle. Le projecteur envoie séquentiellement et de façon synchronisée d'abord l'image OEil Droit puis l'image OEil Gauche. Les lunettes sont actives et comportent des « shutters » ou occultants actifs synchronisés avec le projecteur. Ainsi, chaque oeil perçoit l'image qui lui est destiné et uniquement celle-ci. Les shutters sont généralement réalisés à base de technologie à cristaux liquides. Cette solution présente plusieurs inconvénients.

Les lunettes actives nécessitent une alimentation et une électronique de commande, ce qui pose des problèmes de maintenance dans le cadre d'une utilisation embarquée. De plus, les polariseurs des shutters LCD provoquent un obscurcissement des visualisations de cockpit, pouvant aller jusqu'à l'occultation totale, en fonction des différentes directions de polarisation et de l'inclinaison des lunettes. Enfin, la présence de polariseurs et l'alternance de vision gauche-droite nécessaire à la vision stéréoscopique entraîne une perte importante de la quantité de lumière transmise. La transmission des lunettes ne dépasse alors pas 30 %, ce qui provoque un obscurcissement rédhibitoire du paysage extérieur.

Dans une seconde solution technique, le projecteur stéréoscopique fonctionne en mode polarisé. Il émet successivement et périodiquement une image OEil Droit selon une première polarisation et une image OEil Gauche selon une seconde polarisation, différente de la première polarisation. La paire de lunettes 13 et passive. Elle comporte un premier verre polarisé transparent à la première polarisation et opaque à la seconde et un second verre polarisé transparent à la seconde polarisation et opaque à la première.

Les lunettes à polariseur sont passives et résolvent la problématique de l'occultation alternée de chaque oeil, ainsi que la gestion des piles. Par contre, il faut impérativement utiliser un écran de projection qui conserve la polarisation. Un écran argenté tel qu'utilisé dans les salles de cinéma permet cet usage mais, n'étant pas transparent, il ne convient pas aux applications concernées par l'invention.

Dans une troisième solution technique, le projecteur émet deux images colorées dont les spectres d'émission sont séparés. La paire de lunettes comporte deux filtres différents, le premier transmet le premier spectre et filtre le second spectre. Le second filtre assure la fonction inverse. Ainsi, chaque oeil perçoit une et une seule image colorée et uniquement celle-ci. Cette technique est connue sous le nom d'anaglyphe. La façon la plus simple de réaliser un anaglyphe est de séparer le spectre visible en deux parties, l'une rouge et l'autre bleue. L'avantage évident du dispositif est sa grande simplicité de mise en oeuvre, mais la vision du monde extérieur est fortement altérée.

Plus perfectionné, le système dit à multiplexage spectral sépare le spectre visible en deux parties entrelacées, une dédiée à chaque oeil. La restitution des couleurs est ainsi mieux conservée.

Le point délicat de ce type de système est la génération des images couleur à spectres entrelacés par le projecteur d'images. Différentes solutions techniques ont été proposées.

La première solution consiste à placer devant le projecteur d'images une roue comportant deux filtres colorés, chaque filtre dédié à une image. La rotation des zones colorées est synchronisée ave les images dédiées à chaque oeil. Les demandes de brevet de la société « Dolby Laboratories Licensing Corporation » US 2011/0205494, US 2013/0342904 et US 2014/0022637 décrivent des solutions de ce type pour des applications cinématographiques qui ne nécessitent ni des niveaux de lumière élevée ni, bien entendu, de transmission du paysage extérieur.

Dans une variante de réalisation, la roue comportant les filtres colorés est intégrée au projecteur. Le brevet DE 10249815 de la société Daimler Chrysler AG décrit une solution de ce type. Dans les deux cas, ces solutions techniques nécessitent l'emploi d'un élément rotatif qui présente nécessairement un certain encombrement, peu compatible des matériels embarqués.

Une seconde solution consiste à modifier le chemin optique interne du projecteur de façon à passer alternativement au travers d'un premier filtre coloré puis d'un second filtre coloré. La publication « Spectral Multiplex 3D Cinema Projector, 3DSA2013 Proceedings P5-1 » décrit une solution de ce type. Ce type de solution technique a plusieurs inconvénients. Elle nécessite une optique complexe comportant deux chemins lumineux différents et deux filtres colorés différents. Elle est nécessairement sensible aux environnements externes et se dérègle avec le temps. Enfin, son coût est élevé.

La demande de brevet US2006/098093 décrit également un dispositif de visualisation d'images stéréoscopiques comportant un projecteur d'images stéréoscopiques et un écran semi-transparent combinés à une paire de lunettes à filtres colorés.

Le système de visualisation stéréoscopique selon l'invention ne présente pas ces inconvénients. Il comporte un seul filtre coloré et est basé sur les propriétés de transmission spectrale des filtres interférentiels en fonction de l'incidence. Plus précisément, l'invention a pour objet un système de visualisation comportant des moyens de génération d'images stéréoscopiques d'un objet prédéterminé, un dispositif de visualisation desdites images stéréoscopiques comportant un projecteur d'images stéréoscopiques et un écran semi-transparent, et une paire de lunettes stéréoscopiques, ledit projecteur comportant un imageur, caractérisé en ce que :
le projecteur comporte :
   - un filtre interférentiel disposé devant l'imageur dont la transmission spectrale comporte au moins une bande de transmission de largeur déterminée centrée autour d'une longueur d'onde, ladite longueur d'onde étant fonction de l'incidence de la lumière sur ledit filtre interférentiel, et ;
   - des moyens permettant de faire varier la position angulaire du filtre entre deux positions déterminés de façon à transmettre, pour la première position, une première bande spectrale et pour la seconde position, une seconde bande spectrale ;
la paire de lunettes stéréoscopique comportant un premier verre transmettant la première bande spectrale et bloquant la seconde bande spectrale et un second verre transmettant la seconde bande spectrale et bloquant la première bande spectrale.

Avantageusement, le projecteur comporte :
- un filtre interférentiel dont la transmission spectrale comporte trois bandes de transmission de largeur déterminée centrée autour de trois longueurs d'onde, lesdites longueurs d'onde étant fonction de l'incidence de la lumière sur ledit filtre interférentiel ; et
- des moyens permettant de faire varier la position angulaire du filtre entre deux positions déterminés de façon à transmettre, pour la première position, trois premières bandes spectrales et pour la seconde position, trois secondes bandes spectrales ;
la paire de lunettes stéréoscopique comportant un premier verre transmettant les trois premières bandes spectrales et bloquant les trois secondes bandes spectrales et un second verre transmettant les trois secondes bandes spectrales et bloquant les trois premières bandes spectrales.

Avantageusement, les positions angulaires déterminées du filtre interférentiel sont programmables en fonction des contraintes d'implantation du système de visualisation.

Avantageusement, la paire de lunette comporte des moyens de filtrage commun aux deux verres à une des longueurs d'onde émises par les pointeurs laser grand public de classes 3A, 3B et 4.

Avantageusement, le système comporte des moyens de détection de la position relative de la paire de lunettes par rapport à la position de l'écran semi-transparent et des moyens de calcul des images stéréoscopiques de façon que la position de l'image stéréoscopique de l'objet soit fixe dans un repère prédéterminé et indépendante de la position des lunettes stéréoscopiques.

Avantageusement, le projecteur comporte un système d'asservissement de façon que les positions angulaires déterminées du filtre interférentiel soient fonction des de la position relative de la paire de lunettes par rapport à la position de l'écran semi-transparent.

Avantageusement, la distance prédéterminée est comprise entre quelques centimètres et l'infini optique.

Avantageusement, le système de visualisation est un système de cockpit d'aéronef.

L'invention sera mieux comprise et d'autres avantages apparaîtront à la lecture de la description qui va suivre donnée à titre non limitatif et grâce aux figures annexées parmi lesquelles :
La figure 1 représente une architecture d'un système de visualisation selon l'art antérieur ;
La figure 2 représente la bande de transmission d'un filtre interférentiel en fonction de la longueur d'onde pour deux incidences différentes ;
La figure 3 représente la transmission d'un filtre interférentiel comportant trois bandes de transmission en fonction de la longueur d'onde pour deux incidences différentes ;
Les figures 4 et 5 représentent le fonctionnement de l'imageur pour deux positions angulaires du filtre interférentiel ;
La figure 6 représente une architecture d'un système de visualisation selon l'invention ;
Les figures 7 et 8 représentent la transmission de chaque verre de la paire de lunettes de l'utilisateur.

Le dispositif selon l'invention repose sur les propriétés optiques des filtres interférentiels. Un filtre interférentiel comporte une multitude de couches optiques d'épaisseur voisine de la longueur d'onde ou d'une fraction de longueur d'onde. Les différentes réflexions d'un rayon lumineux à une longueur d'onde donnée sur les différentes couches interférent entre elles. Le rayon lumineux est alors plus ou moins transmis. On peut ainsi, en jouant sur les différents paramètres des couches optiques, obtenir une courbe de transmission en fonction de la longueur d'onde ayant un profil déterminé. Dans le cas présent, les filtres interférentiels utilisés transmettent la lumière dans une ou plusieurs bandes spectrales étroites centrées sur des longueurs d'onde déterminées. Ces bandes ont une largeur de quelques dizaines de nanomètres.

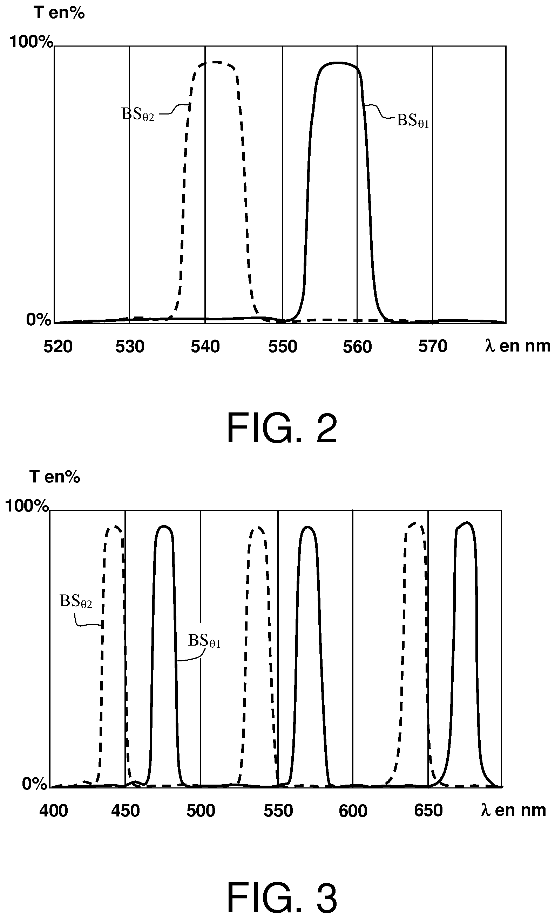

On comprend que les interférences dépendent des déphasages introduits par réflexion sur les couches successives et donc de l'incidence du rayon lumineux. Les courbes de transmission des filtres se décalent vers les basses longueurs d'onde lorsque l'incidence augmente. Ainsi, les deux courbes de la figure 2 représentent, pour un filtre interférentiel transmettant une bande spectrale donnée, l'évolution de la transmission T de cette bande spectrale BS_{θ} en fonction de la longueur d'onde λ pour deux incidences différentes θ1 et θ2. Dans le cas de cette figure, la longueur d'onde est située au centre de la partie visible du spectre autour de 550 nanomètres. La transmission est normalisée. Si la variation d'incidence est suffisamment importante, on peut totalement séparer les deux bandes spectrales BS_{θ1} et BS_{θ2} obtenues à une première et à une seconde incidence comme on le voit sur cette figure 2.

La figure 3 généralise cette propriété dans le cas d'un filtre interférentiel transmettant trois bandes spectrales distinctes BS_{θ}. Il est possible, en changeant l'incidence de θ1 à θ2, de décaler simultanément ces trois premières bandes spectrales BS_{θ1} à une première incidence pour obtenir trois secondes bandes spectrales BS_{θ2} à une seconde incidence de façon que les secondes bandes ne chevauchent pas les premières bandes spectrales. Sur la figure 3, la transmission T du filtre est donnée en fonction de la longueur d'onde λ couvrant tout le spectre visible, de 400 nanomètres à 700 nanomètres.

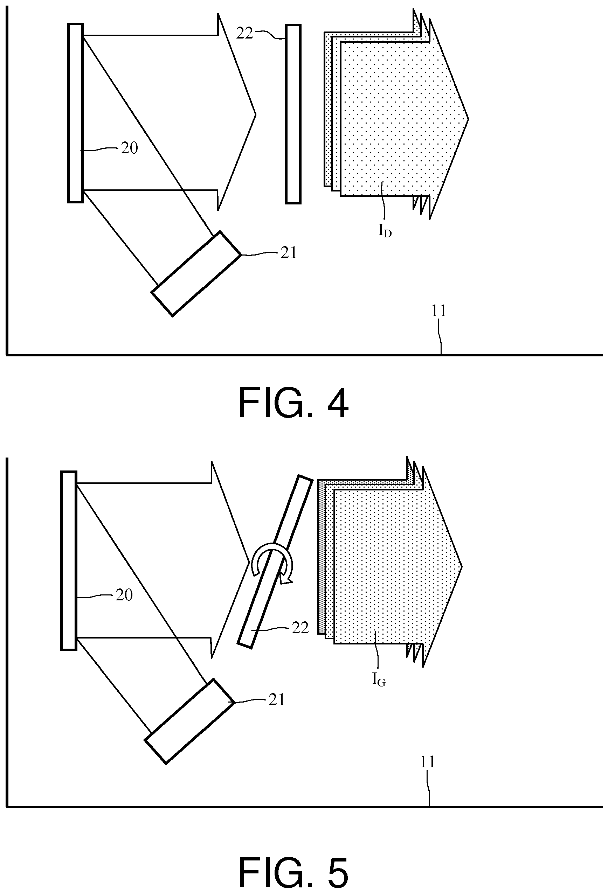

Ainsi, comme illustré sur les figures 4 et 5, si on dispose devant un afficheur 20 éclairé par une source blanche 21, un tel filtre interférentiel 22 à trois bandes, en fonction de l'inclinaison du filtre interférentiel, ce filtre transmet soit un premier triplet I_{D} de bandes spectrales, soit un second triplet I_{G} de bandes spectrales, les deux triplets I_{D} et I_{G} étant totalement disjoints. Ces triplets de bandes spectrales sont symbolisés par des triplets de flèches parallèles sur les figures 4 et 5. On peut ainsi, en jouant uniquement sur l'inclinaison du filtre interférentiel, obtenir deux images colorées spectralement séparées. Généralement, une variation d'incidence du filtre située autour de 30 degrés est suffisante pour séparer les spectres dans le visible.

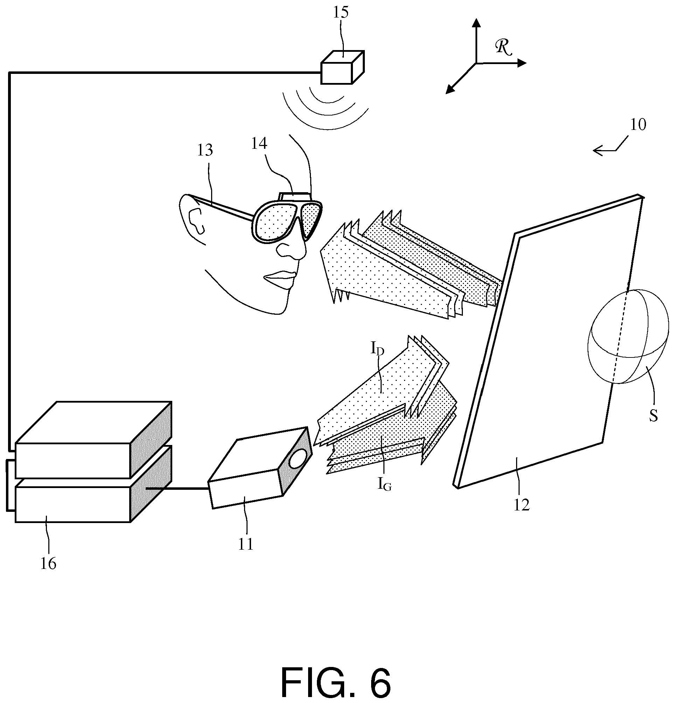

A titre d'exemple, un système de visualisation 10 comportant un tel afficheur 20 selon l'invention est représenté en figure 6. Il comporte au moins :
- Un projecteur 11 d'images stéréoscopiques polychromes ;
- un écran semi-transparent 12 ;
- une paire de lunettes 13 stéréoscopiques à filtres spectraux portée par l'utilisateur.

Le projecteur 11 comporte un afficheur haute résolution et un filtre interférentiel à trois bandes spectrales tels que définis précédemment et une optique de projection ayant un grandissement suffisant pour couvrir l'écran semi-transparent. L'afficheur, le filtre interférentiel et l'optique de projection ne sont pas représentés sur cette figure 6. Pour les applications aéronautiques, il est important que la luminance maximale de l'afficheur puisse être très élevée. A titre d'exemple, l'afficheur fonctionne par réflexion de la lumière et est du type « DMD », acronyme signifiant « Digital Micromirror Device ».

Le diamètre du filtre interférentiel est compris généralement entre 10 et 20 millimètres. L'oscillation du filtre interférentiel est pilotable. Son amplitude est telle que le filtre laisse passer alternativement à une cadence vidéo les trois premières bandes spectrales puis les trois secondes bandes spectrales.

La rotation du filtre est obtenue au moyen d'un actuateur mécatronique qui peut être, par exemple, un actuateur piézo-électrique rotatif, un micromoteur, un moteur pas à pas ou un galvanomètre ou tout autre système assurant cette fonction de rotation à la vitesse souhaitée. Le changement de position angulaire du filtre est réalisé typiquement en moins d'une milliseconde à une cadence double de la fréquence vidéo. Ainsi, pour une fréquence vidéo de 60 Hz, la fréquence de changement est de 120 Hz. La course angulaire du filtre est programmable. L'oscillateur peut disposer d'un dispositif d'indexation ou d'asservissement en rotation de façon que la plage angulaire de rotation puisse varier en fonction, par exemple, de la position des lunettes de l'utilisateur lorsque la position des lunettes est connue du système de visualisation par un système de détection approprié. Cette plage angulaire peut également être réglée en fonction des contraintes d'installation dans un cockpit d'aéronef.

L'écran semi-transparent est une lame optique possédant à la fois une semi-transparence du paysage extérieur et une diffusion des images stéréoscopiques. A cette fin, la surface de l'écran de projection peut comporter un réseau de motifs diffusants ou « patterns ». La diffusion de l'écran se fait dans un large angle de vue, voisin du demi-espace. On obtient ainsi une boite à oeil de grande dimension. On entend par « boîte à oeil » la zone de l'espace où l'image est visible. Cette solution permet également de maîtriser parfaitement la transparence de l'écran. Ainsi, si les motifs ne couvrent qu'un pourcentage limité de la surface de l'écran, la transmission de l'écran est égale à l'unité moins le pourcentage couvert par les motifs. Par exemple, si les motifs couvrent 20% de la surface, la transmission de l'écran est voisine de 80%.

Le fonctionnement du système de visualisation est le suivant. L'afficheur affiche alternativement deux images stéréoscopiques I_{G} et I_{D} représentant un objet qui est une sphère S sur la figure 6, la première est transmise par le filtre interférentiel tourné d'une première incidence dans les trois premières bandes spectrales, la seconde image est transmise par le filtre interférentiel tourné d'une seconde incidence dans les trois secondes bandes spectrales, différentes des trois premières bandes spectrales. Ces triplets de bandes spectrales sont symbolisés par des triplets de flèches parallèles sur la figure 6. A titre d'exemple, les trois premières bandes spectrales correspondent au rouge vif, au vert jaune et au bleu cyan et les trois secondes bandes spectrales correspondent au rouge orangé, au vert cyan et au bleu roi. Dans les deux cas, ces triplets peuvent reconstituer une image colorée avec des rendus des couleurs équivalents.

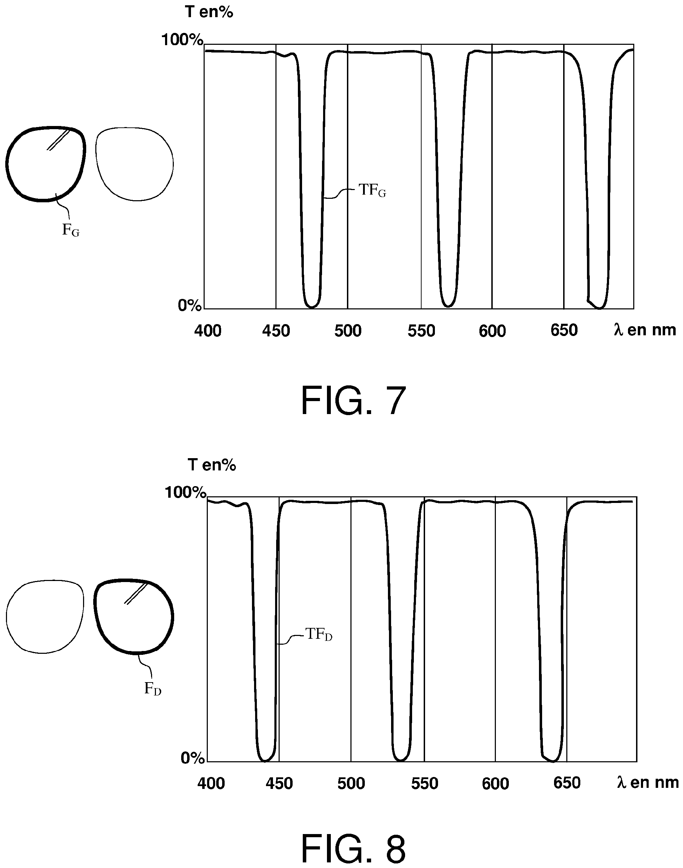

La paire de lunette comporte un premier filtre F_{D} disposé devant l'oeil droit et un second filtre F_{G} disposé devant l'oeil gauche. Les figures 7 et 8 représentent les transmissions TF_{G} et TF_{D} respectives de chaque verre en fonction de la longueur d'onde λ en nanomètres. Le premier filtre F_{D} transmet la totalité du spectre à l'exception des trois secondes bandes spectrales et le second filtre F_{G} transmet la totalité du spectre à l'exception des trois premières bandes spectrales.

Ainsi, l'oeil droit ne peut voir que la première image stéréoscopique et l'oeil droit ne peut voir que la seconde image stéréoscopique. Les images stéréoscopiques successives sont bien séparées et l'illusion stéréoscopique est restituée. L'utilisateur perçoit une image fusionnée virtuellement placée à une certaine distance de l'écran de visualisation, cette distance pouvant être l'infini pour certaines applications. L'objet peut être bidimensionnel s'il s'agit, par exemple, d'un symbole ou tridimensionnel.

Le système permet alors de générer des objets dans une très large gamme de distances allant de l'infini à des distances très proches de l'utilisateur. Ainsi, l'image stéréoscopique peut représenter un objet placé devant l'écran semi-transparent.

Un autre avantage du système selon l'invention est que l'on peut filtrer une des longueurs d'onde émises par les pointeurs laser grand public de classes 3A, 3B et 4 de façon à protéger l'utilisateur de ces pointeurs. Une solution possible est d'ajouter aux filtres du système stéréoscopique un filtre supplémentaire qui bloque cette longueur d'onde. Une autre solution possible est d'élargir les bandes spectrales de façon que la première bande spectrale du premier filtre F_{G} et la seconde bande spectrale du second filtre F_{D} se chevauchent en partie, ladite longueur d'onde émise λ_{L} par un pointeur laser grand public étant située dans ladite zone de chevauchement de façon à être filtrée par le premier filtre et par le second filtre. Avec cette dernière solution, il n'est pas nécessaire d'ajouter de filtres spécifiques.

Le système selon l'invention peut comporter un système de détection de la position de la paire de lunettes. Ce type de détection comporte classiquement deux sous-ensembles, comme on le voit sur la figure 2, un premier sous-ensemble 14 fixé à la paire de lunettes, un second sous-ensemble 15 disposé dans un repère fixe. Il existe différentes techniques permettant de repérer un objet dans l'espace. On peut utiliser la détection électromagnétique. Un émetteur est disposé dans le repère fixe et un récepteur dans le repère mobile. On peut également utiliser la détection optique qui peut être passive ou active. Dans ce dernier cas, la paire de lunettes porte des diodes électroluminescentes dont la position de l'émission est repérée par des caméras. Toutes ces techniques sont connues de l'homme du métier. Elles sont compatibles d'un fonctionnement en temps réel et s'adaptent facilement au système de visualisation selon l'invention.

Lorsque l'utilisateur bouge la tête, ses mouvements sont captés par les moyens de détection de la paire de lunette. Le calculateur électronique recalcule alors en temps réel la position des images stéréoscopiques de façon que l'utilisateur continue de voir l'image virtuelle de l'objet à la même place. Pour prendre un exemple simple, si l'image virtuelle de l'objet est à l'infini, les images stéréoscopiques OEil Droit et OEil Gauche sont séparées d'une distance qui vaut sensiblement la distance moyenne interpupillaire d'un être humain. Leur déplacement sur l'écran de visualisation est sensiblement égal à celui de la paire de lunette. On crée ainsi la sensation d'image à l'infini.

Comme il a été dit, le système de détection de la position des lunettes peut également être utilisé pour asservir la plage angulaire de rotation de l'oscillateur du filtre interférentiel de façon que la transmission des images par les verres de lunettes soit constamment optimisée, même si l'utilisateur bouge la tête.

Les applications techniques du système de visualisation selon l'invention sont principalement l'aide à la conduite de véhicule. Le système selon l'invention s'applique tout particulièrement au domaine des planches de bord d'aéronef où le pilote a besoin à la fois de voir l'extérieur et d'avoir des informations sur la conduite de vol ou la navigation de l'appareil. L'application dans le domaine des hélicoptères est particulièrement intéressante dans la mesure où les hélicoptères possèdent des verrières de grande dimension et sont amenés à effectuer des vols à basse altitude.

## Revendications

1. Système de visualisation (10) comportant des moyens (16) de génération d'images stéréoscopiques d'un objet prédéterminé, un dispositif de visualisation desdites images stéréoscopiques comportant un projecteur (11) d'images stéréoscopiques et un écran semi-transparent (12) ; et une paire de lunettes stéréoscopiques (13), ledit projecteur comportant un imageur (20), **caractérisé en ce que** :
le projecteur comporte :
- un filtre interférentiel (22) disposé devant l'imageur dont la transmission spectrale comporte au moins une bande de transmission (BS) de largeur déterminée centrée autour d'une longueur d'onde, ladite longueur d'onde étant fonction de l'incidence de la lumière sur ledit filtre interférentiel, et ;
- des moyens de rotation pilotables permettant de faire varier la position angulaire du filtre interférentiel entre deux positions déterminées de façon à transmettre, pour la première position, une première bande spectrale (BS_{θ1}) et pour la seconde position, une seconde bande spectrale (BS_{θ2}) ;
la paire de lunettes stéréoscopiques comportant un premier verre (F_{G}) transmettant la première bande spectrale et bloquant la seconde bande spectrale et un second verre (F_{G}) transmettant la seconde bande spectrale et bloquant la première bande spectrale.

2. Système de visualisation selon la revendication 1, **caractérisé en ce que** le projecteur comporte :
un filtre interférentiel dont la transmission spectrale comporte trois bandes de transmission de largeur déterminée centrée autour de trois longueurs d'onde, lesdites longueurs d'onde étant fonction de l'incidence de la lumière sur ledit filtre interférentiel ; et
des moyens permettant de faire varier la position angulaire du filtre entre deux positions déterminés de façon à transmettre, pour la première position, trois premières bandes spectrales et pour la seconde position, trois secondes bandes spectrales ;
la paire de lunettes stéréoscopique comportant un premier verre transmettant les trois premières bandes spectrales et bloquant les trois secondes bandes spectrales et un second verre transmettant les trois secondes bandes spectrales et bloquant les trois premières bandes spectrales.

3. Système de visualisation selon l'une des revendications précédentes, **caractérisé en ce que** les positions angulaires déterminées du filtre interférentiel sont programmables en fonction des contraintes d'implantation du système de visualisation.

4. Système de visualisation selon l'une des revendications précédentes, **caractérisé en ce que** la paire de lunette comporte des moyens de filtrage commun aux deux verres de façon qu'une longueur d'onde située dans la zone de chevauchement desdits moyens de filtrage commun aux deux verres soit filtrée par le premier verre et par le second verre.

5. Système de visualisation selon l'une des revendications précédentes, **caractérisé en ce que** le système comporte des moyens de détection (14, 15) de la position relative de la paire de lunettes par rapport à la position de l'écran semi-transparent et des moyens de calcul des images stéréoscopiques de façon que la position de l'image stéréoscopique de l'objet soit fixe dans un repère prédéterminé et indépendante de la position des lunettes stéréoscopiques.

6. Système de visualisation selon la revendication 5, **caractérisé en ce que** le projecteur comporte un système d'asservissement de façon que les positions angulaires déterminées du filtre interférentiel soient fonction de la position relative de la paire de lunettes par rapport à la position de l'écran semi-transparent.

7. Système de visualisation selon l'une des revendications précédentes, **caractérisé en ce que** la distance de l'objet prédéterminé à l'utilisateur est comprise entre quelques centimètres et l'infini optique.

8. Système de visualisation selon l'une des revendications précédentes, **caractérisé en ce que** le système de visualisation est un système de cockpit d'aéronef.

## Patentansprüche

1. Anzeigesystem (10), das Folgendes umfasst: Mittel (16) zum Erzeugen von stereoskopischen Bildern eines vorbestimmten Objekts, ein Gerät zum Anzeigen der genannten stereoskopischen Bilder, umfassend einen stereokopischen Bildprojektor (11) und einen teiltransparenten Bildschirm (12); und eine stereokopische Brille (13), wobei der Projektor einen Imager (20) umfasst, **dadurch gekennzeichnet, dass** der Projektor Folgendes umfasst:
- ein Interferenzfilter (22), das vor dem Imager angeordnet ist, dessen Spektraltransmission wenigstens ein Transmissionsband (BS) mit einer vorbestimmten Breite umfasst, die um eine Wellenlänge zentriert ist, wobei die Wellenlänge vom Einfall des Lichts auf das Interferenzfilter abhängig ist; und
- steuerbare Drehmittel, die das Variieren der Winkelposition des Interferenzfilters zwischen zwei vorbestimmten Positionen zulassen, um für die erste Position ein erstes Spektralband (BS_{θ1}) und für die zweite Position ein zweites Spektralband (BS_{θ2}) durchzulassen;
wobei die stereoskopischen Brille eine erste Linse (F_{G}) umfasst, die das erste Spektralband durchlässt und das zweite Spektralband sperrt, und eine zweite Linse (F_{G}), die das zweite Spektralband durchlässt und das erste Spektralband sperrt.

2. Anzeigesystem nach Anspruch 1, **dadurch gekennzeichnet, dass** der Projektor Folgendes umfasst:
ein Interferenzfilter, dessen Spektraltransmission drei Transmissionsbänder mit einer vorbestimmten Breite umfasst, die um drei Wellenlängen zentriert ist, wobei die Wellenlängen vom Einfall des Lichts auf das Interferenzfilter abhängig sind; und
Mittel zum Zulassen einer Variation der Winkelposition des Filters zwischen zwei vorbestimmten Positionen, um für die erste Position drei erste Spektralbänder durchzulassen und für die zweite Position drei zweite Spektralbänder durchzulassen;
wobei die stereoskopische Brille eine erste Linse umfasst, die drei erste Spektralbänder durchlässt und drei zweite Spektralbänder sperrt, und eine zweite Linse, die die drei zweiten Spektralbänder durchlässt und die drei ersten Spektralbänder sperrt.

3. Anzeigesystem nach einem der vorherigen Ansprüche, **dadurch gekennzeichnet, dass** die bestimmten Winkelpositionen des Interferenzfilters in Abhängigkeit von Installationsbeschränkungen des Anzeigesystems programmierbar sind.

4. Anzeigesystem nach einem der vorherigen Ansprüche, **dadurch gekennzeichnet, dass** die Brille Filtermittel umfasst, die den zwei Linsen gemeinsam sind, so dass eine Wellenlänge, die sich in der den zwei Linsen gemeinsamen Überlappungszone der Filtermittel befindet, von der ersten Linse und von der zweiten Linse gefiltert wird.

5. Anzeigesystem nach einem der vorherigen Ansprüche, **dadurch gekennzeichnet, dass** das System Mittel (14, 15) zum Erkennen der relativen Position der Brille relativ zur Position des teiltransparenten Bildschirms und Mittel zum Berechnen von stereoskopischen Bildern umfasst, so dass die Position des stereoskopischen Bildes des Objekts in einem vorbestimmten Referenzpunkt fixiert ist, und von der Position der stereokopischen Brille unabhängig ist.

6. Anzeigesystem nach Anspruch 5, **dadurch gekennzeichnet, dass** der Projektor ein Servosteuersystem umfasst, so dass die bestimmten Winkelpositionen des Interferenzfilters eine Funktion der relativen Position der Brille relativ zur Position des teiltransparenten Bildschirms sind.

7. Anzeigesystem nach einem der vorherigen Ansprüche, **dadurch gekennzeichnet, dass** die Distanz von dem vorbestimmten Objekt zum Benutzer zwischen mehreren Zentimetern und optischer Unendlichkeit liegt.

8. Anzeigesystem nach einem der vorherigen Ansprüche, **dadurch gekennzeichnet, dass** das Anzeigesystem ein Cockpitsystem in einem Luftfahzeug ist.

## Claims

1. A viewing system (10) comprising means (16) for generating stereoscopic images of a predetermined object, a device for viewing said stereoscopic images comprising a stereoscopic image projector (11) and a semi-transparent screen (12), and a pair of stereoscopic glasses (13), said projector comprising an imager (20), **characterised in that** said projector comprises:
- an interference filter (22) arranged in front of said imager, the spectral transmission of which comprises at least one transmission band (BS) of predetermined width centred around a wavelength, said wavelength being a function of the incidence of the light on said interference filter; and
- controllable rotation means allowing the angular position of said interference filter to be varied between two predetermined positions so as to transmit, for the first position, a first spectral band (BS_{θ1}) and, for the second position, a second spectral band (BS_{θ2});
said pair of stereoscopic glasses comprising a first lens (F_{G}) transmitting the first spectral band and blocking the second spectral band and a second lens (F_{G}) transmitting the second spectral band and blocking the first spectral band.

2. The viewing system according to claim 1, **characterised in that** said projector comprises:
an interference filter, the spectral transmission of which comprises three transmission bands of predetermined width centred around three wavelengths, said wavelengths being a function of the incidence of the light on said interference filter; and
means for allowing the angular position of said filter to be varied between two predetermined positions so as to transmit, for the first position, three first spectral bands and, for the second position, three second spectral bands;
said pair of stereoscopic glasses comprising a first lens transmitting the three first spectral bands and blocking the three second spectral bands and a second lens transmitting the three second spectral bands and blocking the three first spectral bands.

3. The viewing system according to any one of the preceding claims, **characterised in that** the predetermined angular positions of said interference filter are programmable as a function of the installation constraints of said viewing system.

4. The viewing system according to any one of the preceding claims, **characterised in that** said pair of glasses comprises filtering means common to said two lenses so that a wavelength located in the area of overlap of said filtering means common to said two lenses is filtered by said first lens and by said second lens.

5. The viewing system according to any one of the preceding claims, **characterised in that** said system comprises means (14, 15) for detecting the relative position of said pair of glasses relative to the position of said semi-transparent screen and means for computing stereoscopic images so that the position of the stereoscopic image of said object is fixed in a predetermined reference frame and is independent of the position of said stereoscopic lenses.

6. The viewing system according to claim 5, **characterised in that** said projector comprises a servo-control system so that the predetermined angular positions of said interference filter are a function of the relative position of said pair of glasses relative to the position of said semi-transparent screen.

7. The viewing system according to any one of the preceding claims, **characterised in that** the distance from said predetermined object to the user is between several centimetres and optical infinity.

8. The viewing system according to any one of the preceding claims, **characterised in that** said viewing system is an aircraft cockpit system.
